# EUROPEAN PATENT APPLICATION

(11) **EP 2 104 053 A1**
(43) Date of publication of application: **23.09.2009**
(21) Application number: 08300147.9
(22) Date of filing: 17.03.2008
(51) Int. Cl.: G06F 21/24, G06F 21/20

(54) **Data storage device and system for protection of data**

(71) Applicant: THOMSON Licensing, 92100 Boulogne-Billancourt (FR)
(72) Inventor: Onno, Stephane, 35760, SAINT GREGOIRE (FR); Maetz, Yves, 35520, MELESSE (FR); Karroumi, Mohamed, 35000, RENNES (FR)
(74) Representative: Ruellan-Lemonnier, Brigitte

(57) **Abstract**

A data storage device (100, 400) for protection of data. The data storage device comprises a data storage area (101) adapted to store protected data; an interface (103, 403) adapted to send protected data stored in the data storage area (101) to a second device (120) and to receive, from the second device (120), data for storage in the data storage area (101) as protected data. An authentication unit (105, 405) is adapted to detect the presence of a portable object (110) through the communication unit (104) and enable access to protected data by the second device (120) only if the presence of the portable object has been detected. Data may be protected by encryption carried out by an encryption unit (102) or by enabling/disabling the interface (403). Preferably, the portable object (110) is authenticated by the authentication unit, the authentication may be renewed after a given time or each time a specific action, such as access to protected data, is requested. The presence of a plurality of portable objects may be required to access protected data.

## Description

### FIELD OF THE INVENTION

The present invention relates generally to digital content storage devices, and in particular to protection of such devices.

### BACKGROUND OF THE INVENTION

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

There are many kinds of light-weight portable data storage devices, such as for example USB (Universal Serial Bus) memory sticks, available on the market today. Such devices have many advantages as they are light, small, easy to use, relatively cheap and able to store much data.

However, these advantages may, in certain cases, also become drawbacks. These devices may for example be easily lost (or stolen) owing to their small size. In this case, the data thereon may be recovered by persons who are not supposed to have access thereto. Indeed, it may be possible for a person to temporarily disconnect a device from a computer, copy its contents and reconnect the device with no one the wiser. This particular drawback has been, at least partially, countered by the use of encryption applications (for example available from Truecrypt). A software application that runs on a host computer allows the user to input a password in order for the content on the portable storage medium to be decrypted (or encrypted) by a secret key derived from this password. Unfortunately, these solutions are vulnerable to many password attacks including shoulder surfing, brute force, reverse engineering, memory analysis tools, and key loggers.

Another problem linked to these devices is that they are often used to transfer data between computers, which means that they may be excellent propagators of virus and other malware. And it is also possible that a virus, resident on the computer to which the device is connected, copies data from the device unbeknownst to the user.

It can therefore be appreciated that there is a need for a solution that provides a portable data storage device that overcomes at least some of the drawbacks of the prior art. This invention provides such a solution.

### SUMMARY OF THE INVENTION

In a first aspect, the invention is directed to a data storage device comprising a data storage area adapted to store protected data; an interface adapted to send protected data stored in the data storage area to a second device and to receive, from the second device, data for storage in the data storage area as protected data; and an authentication unit adapted to detect presence of at least one portable object; and enable access to protected data by the second device only if the presence of the at least one portable object has been detected.

In a first preferred embodiment, the data storage device further comprises an encryption unit adapted to protect data for storage in the data storage area by encryption and to decrypt protected data to be sent to the second device.

In a second preferred embodiment, the authentication unit is further adapted to enable access to protected data by the second device by instructing the interface to send the protected data to the second device.

In a third preferred embodiment, the authentication unit is further adapted to allow access to protected data only upon successful authentication of the at least one portable object. In a variant embodiment, the authentication unit is adapted to allow access to protected data only upon successful authentication of a plurality of portable objects using a different secret for each of the plurality of portable objects.

In a fourth preferred embodiment, the authentication unit is adapted to renew the detection of the presence of the at least one portable object after a determined time.

In a fifth preferred embodiment, the authentication unit is adapted to renew the detection of the presence of the at least one portable object whenever access to protected data is requested by the second device.

In a sixth preferred embodiment, the data storage device further comprises a communication unit adapted to communicate with the at least one portable object, wherein the authentication unit is adapted to detect the presence of the at least one portable object through the communication unit. It is advantageous that the communication unit is adapted to communicate with the at least one portable object over a short-range wireless link.

In a seventh preferred embodiment, the data storage device is further adapted to store non-protected data in the first storage area, and to enable access to the non-protected data even when presence of the at least one portable object is not detected.

In a second aspect, the invention is directed to a system for protection of data, the system comprising a data storage device of claim 1 and a portable object comprising a communication unit enabling the authentication unit to detect the presence of the portable object.

### BRIEF DESCRIPTION OF THE DRAWINGS

Preferred features of the present invention will now be described, by way of non-limiting example, with reference to the accompanying drawings, in which:
Figure 1 illustrates a data storage device according to a first embodiment of the present invention;
Figure 2 illustrates an example of a prior art authentication protocol that may be used in an embodiment of the present invention;
Figure 3 illustrates an exemplary secure protocol for the encryption of a content key that may be used in an embodiment of the present invention;
Figure 4 illustrates a second preferred embodiment of a data storage device according to the invention; and
Figure 5 illustrates a preferred embodiment of a method for using a data storage device.

### PREFERRED EMBODIMENT OF THE INVENTION

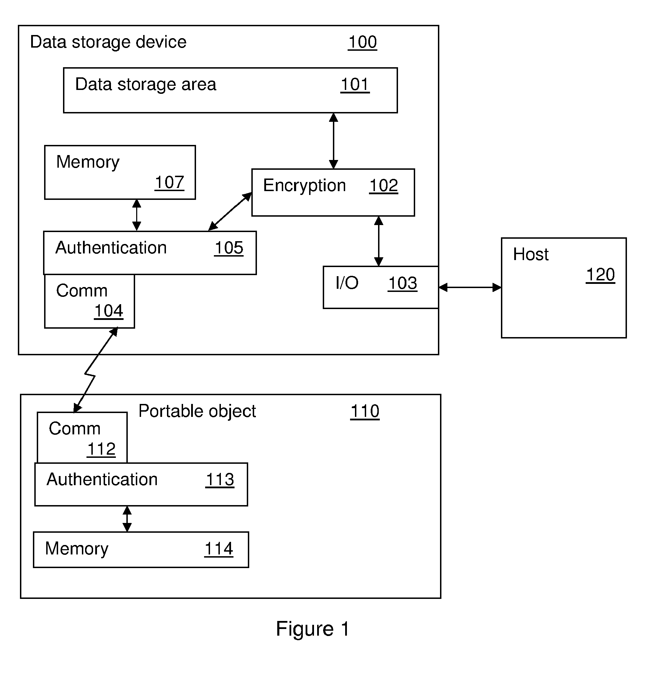

Figure 1 illustrates a data storage device 100 according to a first embodiment of the present invention. The data storage device 100 comprises a first, main storage area 101 adapted for storing content for its user, and a second storage area 107 for storing at least one probably unique secret key K1, which for example may be a symmetric key or an asymmetric key pair (PK1, SK1). The data storage device 100 further comprises an encryption unit 102 for encrypting data to be stored in the first storage area 101 and for decrypting data read from it. The data to be stored in the first storage area 101 is sent to the encryption unit 102 from an interface 103. The interface also receives decrypted data coming from the encryption unit 102. The interface 103 is adapted for interaction with a host 120 that, for example, may be a personal computer, a camera, a mobile phone or a gaming console, and for providing file system services for manipulating content in the first storage area 101, such as file browsing, writing, reading, deletion, and setting of file properties. The interface 103 is preferably adapted to communicate with the host 120 upon physical connection thereto, but it is also possible for the communication link to be wireless or for it to pass through a number of intermediate devices (not shown). The interface 103 may also comprise a plurality of interfaces, for example one or more wired interfaces as well as one or more wireless interfaces, through which the data storage device 100 also may communicate simultaneously.

The data storage device 100 further comprises a communication unit 104 adapted for communication with a portable object 110 that is intended to remain with the user. The communication unit 104 is functionally connected to a first authentication unit 105 that is adapted for detecting the presence of the portable object 110 as well as authenticating it. The communication link is preferably a wireless short-range radio link, for example based on RFID (Radio Frequency IDentification), NFC (Near Field Communication), or Bluetooth^{™} technology. The authentication unit is responsible for establishing a secure communication with the portable object 110 and for generating secret keys used for data encryption and/or decryption. The functional units of the data storage device 100 (as, indeed, of the portable object 110) are at least partly advantageously implemented in at least one processor and at least one memory.

The portable object 110 comprises a communication unit 112, adapted for communication with a corresponding communication unit 104 of a data storage device 100. The communication unit 112 is functionally connected to a second authentication unit 113 that is adapted for authenticating the data storage device 100. The portable object further comprises a non-volatile memory 114 for storage of at least one probably unique secret key K2, which could be a symmetric key or an asymmetric key pair (PK2, SK2) and possibly also authentication data for use by the authentication unit 113. The portable object 110 is preferably quite small in size so that the user can attach it to something that he or she is likely to carry or wear throughout the day, such as a key ring or the wristband of a watch. The portable object 110 may either be powered by the data storage device 100 (if e.g. RFID technology is used) or by a battery (not shown).

According to the first embodiment, data is stored in the first storage area 101 in encrypted form, and presence of the portable object 110 is needed to decrypt it. Similarly, the presence of the portable object 110 is needed also to encrypt data for storage in the first storage area 101. When the first authentication unit 105 detects the presence of a portable object 110 and successfully authenticates the latter, it generates a secret encryption key Kc. On the other hand, when the portable object 110 is not present or is not successfully authenticated, then no secret key is generated and encryption of data is not possible. If no encryption is possible, then it is possible that storage of the data is not enabled; if the data is stored, it is preferred to inform the user that the data will not be encrypted. In the latter case, it is preferred that the data storage device 100 keeps track of any data that has not been encrypted, so that this data may freely be delivered to a host without decryption.

The first authentication unit 105 has sole access to secret information used for authentication of the portable object 110, and the second authentication unit 113 has sole access to secret information used for authentication of data storage device 100. In case the portable object 110 and the data storage device 100 are paired (preferably during manufacture), the secret information advantageously comprises a secret key K shared between the two devices 100 and 110. The secret key K is used to set up the authentication protocol between data storage device 100 and the portable object 110.

Pairing can for example ensure that a storage device can be used together with a single portable object, and vice versa. Moreover, pairing by sharing a secret key K can allow saving of computation effort for subsequent pairing operations, which is particularly interesting if the portable object has limited computation abilities (incapable of computing exponentiation and hence asymmetric cryptography operations), as secure pairing could otherwise not be possible. Alternatively, a storage device may work together with a limited plurality of portable objects, and it is also possible for a portable object to work together with a limited plurality of data storage devices.

It is further preferred that the data storage device 100 regularly checks the presence of the portable object 110, but it is also possible that this is done only when data is to be stored (i.e. written) or retrieved (i.e. read). Upon a successful presence check, the two devices authenticate each other.

There exist several techniques in the cryptographic literature to perform pairing between two devices. Some of them are based on combination of asymmetric and symmetric cryptography and others on symmetric cryptography only. Generally, pairing techniques permit the devices to compute a common secret key not known to other devices. Details on how the pairing may be set up between the data storage device and the portable object is beyond the scope of this description.

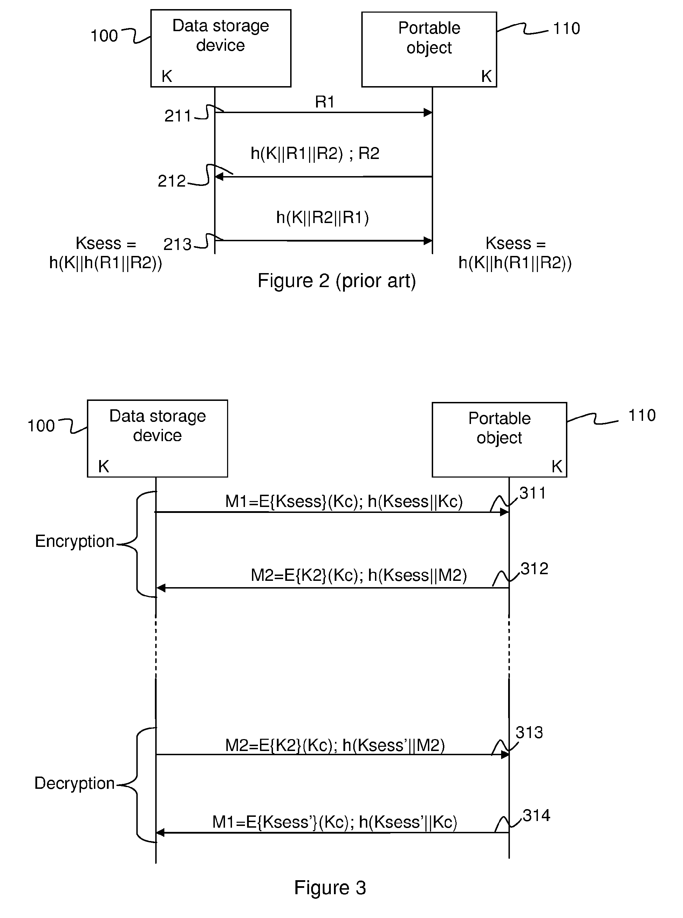

Figure 2 illustrates an example of a prior art authentication protocol, which may be used when the data storage device 100 and the portable object 110 are already paired and share a common secret key K. The data storage device 100 generates a random value R1 and sends it in a first message 211 to the portable object 110. The portable object 110 receives the message 211, generates a random value R2, and computes a digest of the concatenation of K, R1 and R2, in that order. The digest operation can be done using to any suitable hash function such as MD-5, SHA-1 or any bloc cipher such as DES or AES used in CBC-MAC mode. The portable object 110 sends the random value R2 and the result of the digest operation in a second message 212 to the data storage device 100, which receives the second message 212 and checks that it obtains the same result by computing a digest over the same values. If the same result is obtained, the data storage device 100 generates a third message 213 comprising the digest of the concatenation of K, R2 and R1, in that order (it should be noted that the order between R1 and R2 is different in the two concatenations). The portable object 110 receives the third message 213 and checks that it obtains the same result by computing a digest over the same values. If the same result is obtained, then the authentication is successful. After that, both devices are able to compute a common session key Ksess derived from the common secret key K, and the two random values R1 and R2 (i.e. Ksess = h(K∥h(R1∥R2)). It will be appreciated that the authentication illustrated in Figure 2 is mutual, i.e. the data storage device 100 authenticates the portable object 110 and vice versa. Moreover, a new different session key Ksess is computed after each authentication process.

When content is going to be stored on data storage area 101 and the mutual authentication succeeds, the authentication unit 105 generates a content key Kc. The encryption unit 102 encrypts the content using the content key Kc. The secret key may be the same for all files, but it is preferred that it is specific to each file. Next, content key Kc is stored in a secure location accessible only by the authentication unit 105, such as the second storage area 107, which preferably is tamper-proof. An attacker who wants to access stored, encrypted content would have to retrieve at least one content key, and to do so the attacker normally has to open the data storage device and then break it.

In another preferred embodiment, the decryption of any content is not possible if the portable object 110 is not present. One way of achieving this is to store all the content keys Kc in the portable object 110. When the data storage device 100 generates a content key Kc, it encrypts the content using Kc and stores the encrypted content in the first storage area 101, sends the content key Kc to the portable object 110 and erases the content key. When decrypting a given content, the data storage device 100 needs the associated content key Kc that could be provided only by the portable object 110. This solution may have a limitation when different keys Kc are used for the encryption of different contents, as the memory 114 of the portable object 110 may saturate quickly if the memory space is small compared to that of the data storage device 100. A better alternative may then be to store, in the data storage device 100, the content key Kc encrypted with the portable object secret key K2. Even if the encrypted content key is stored in the memory 107 of the storage device 100, it can not retrieve the encrypted content key Kc as the key K2 is known only by the portable object 110. When needed, the encrypted content key Kc has to be sent to portable object 110 that performs the decryption and sends back the result.

Figure 3 illustrates an exemplary secure protocol for the encryption of the content key Kc by the portable object 110. The messages exchanged do not reveal the value of the content key Kc. The two devices use the session key Ksess, obtained after a successful mutual authentication, to exchange data. The use of session key permits not to compromise the content key Kc and to counter replay attacks. In a first message 311, the data storage device 100 sends Kc encrypted with Ksess, M1=E{Ksess}(Kc), and a digest of the concatenation of the common secret key Ksess and Kc, h(Ksess∥Kc). Upon reception of the first message 311, the portable object 110 decrypts M1 using the session key Ksess to get Kc, and checks that it has decrypted the right key by computing the digest value h(K∥Kc). If Kc is successfully authenticated, the portable object 110 then encrypts Kc using its secret key K2, M2=E{K2}(Kc), and sends a second message 312 to the data storage device 100. The second message 312 comprises M2=E{K2}(Kc) and a digest of the concatenation of the session key Ksess and M2. Upon reception of the second message 312, the data storage device 100 authenticates M2 by computing the digest h(Ksess∥M2). If M2 is successfully authenticated, the data storage device 100 then stores M2, preferably with the content encrypted with Kc.

In order to decrypt content encrypted with a content key Kc, the data storage device 100 sets up a mutual authentication with portable object 110, for example using the authentication protocol illustrated in Figure 2. If the mutual authentication is successful then a new session key Ksess' is computed. The data storage device 100 sends M2=E{K2}(Kc) and a digest of the concatenation of the new session key Ksess' and M2 (i.e. h(Ksess'∥M2)) in a third message 313. Upon reception of the third message 313, the portable object 110 authenticates M2 by computing the digest value h(Ksess'∥M2). If M2 is successfully authenticated, the portable object 110 then decrypts M2 using its secret key K2, M1=D{K2}(M2). The portable object 110 sends to the data storage device 100 a fourth message 314 comprising M₁=E{Ksess'}(Kc) and a digest of the concatenation of the new session key Ksess' and the content key Kc. Upon reception of the fourth message 314 data storage device 100 decrypts M1 to retrieve the content key Kc and authenticates Kc by computing the digest h(Ksess'∥Kc). If Kc is successfully computed, it allows decryption of the content with Kc.

In each device, it is the authentication units 105, 113 that authenticate the messages.

The person skilled in the art will appreciate that asymmetric cryptography may also be used (not shown). If the data storage device 100 is paired with the portable object 110, it knows the public key PK2 of the portable object 110. Therefore, the encryption unit 102 encrypts the content using the content key Kc, and the content key Kc is then encrypted using the public key PK2 of the portable object 110. The encrypted content key is then stored, preferably with the content in the data storage area 101. In order to decrypt content encrypted with a content key, the authentication unit 105 set up a mutual authentication between the data storage device 100 and portable object 110. If the authentication is successful, data storage device 100 sends the encrypted content key to the portable object 110 for decryption. The portable object 110 decrypts the message using its private key SK2 and returns it (encrypted with the session key obtained at mutual authentication step) to the authentication unit 105. The authentication unit 105 receives the decrypted message, and the content key Kc is used for decryption of the content.

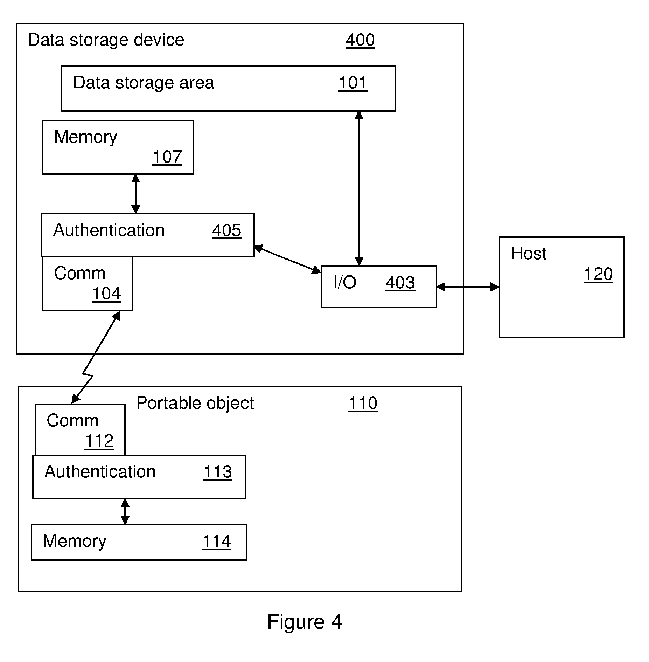

Figure 4 illustrates a second preferred embodiment of a data storage device according to the invention. The data storage device 400 is quite similar to the data storage device 100 of the first preferred embodiment and reference numbers indicating the same features remain the same.

The data storage device 400 of the second preferred embodiment, does not comprise any encryption unit. To protect the data, the authentication unit 205 communicates directly with the interface 403. It should be noted that the functions of these features resemble those of the first preferred embodiment with a few differences. When the authentication unit 405 has authenticated the portable object 110, it allows the interface 403 to export data stored in the first data storage area 101; in other cases, it does not allow export of data. This enables the protection of files on stored by the data storage device 400, as it is not possible for the host 120 to access its content at all. Data leakage may thus be avoided.

To protect the data, the authentication unit 405 communicates directly with the interface 403. It should be noted that the functions of these features resemble those of the first preferred embodiment with a few differences. When the authentication unit 405 has authenticated the portable object 110, it allows the interface 403 to export data stored in the first data storage area 101; in other cases, it does not allow export of data. This enables the protection of files stored by the data storage device 400, as it is not possible for the host 120 to access its content at all. Data leakage may thus be avoided.

In a variant, the authentication unit 405 also (or instead) allows the writing of data in the first storage area 101. This can allow protection against the writing of files containing viruses and other malware in the data storage device 400. It is thus e.g. possible for a user to temporarily lend the data storage device 400 to a colleague in order for the latter to copy a file, without having to fear viruses.

In a third preferred embodiment of the data storage device according to the invention (not shown), the first and the second embodiments are combined. Content is protected by encryption as in the first embodiment, while access to the content is limited as in the second embodiment.

In a variant embodiment, the authentication unit 105, 405 requires the presence of a pre-defined plurality of different portable objects in order to allow access to content according to any of the three preferred embodiments.

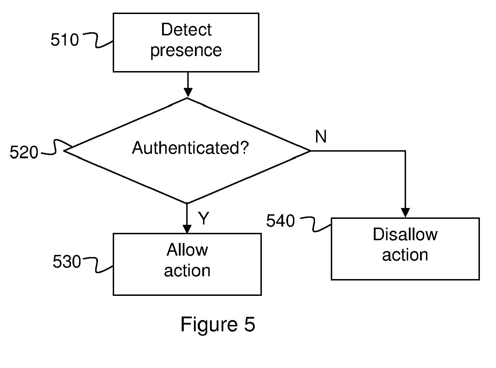

Figure 5 illustrates a preferred embodiment of a method for using a data storage device according to any of the preferred embodiments. First, the authentication unit 105, 205 detects 510 the presence of the portable object 110. This detection could, as described hereinbefore, for example be performed on a regular basis and/or whenever a particular action, such as reading from or writing to the first storage area 101, is to be performed. The authentication unit 105, 205 then tries to authenticate 520 the portable object 110. If the authentication is unsuccessful ("N"), then the action is disallowed 540. Conversely, if the authentication is successful ("Y"), then the action is allowed 530.

While the preferred embodiments have focused on portable storage media, it will be appreciated that the present invention may also be used for resident storage media, such as for example hard disks.

Each feature disclosed in the description and (where appropriate) the claims and drawings may be provided independently or in any appropriate combination. Features described as being implemented in hardware may also be implemented in software, and vice versa. Connections may, where applicable, be implemented as wireless connections or wired, not necessarily direct or dedicated connections.

Reference numerals appearing in the claims are by way of illustration only and shall have no limiting effect on the scope of the claims.

## Claims

1. A data storage device (100, 400) comprising:
a data storage area (101) adapted to store protected data;
an interface (103, 403) adapted to send protected data stored in the data storage area (101) to a second device (120) and to receive, from the second device (120), data for storage in the data storage area (101) as protected data; and
an authentication unit (105, 405) adapted to:
detect the presence of at least one portable object (110); and
enable access to protected data by the second device (120) only if the presence of the at least one portable object has been detected.

2. The data storage device of claim 1, further comprising an encryption unit (102) adapted to protect data for storage in the data storage area (101) by encryption and to decrypt protected data to be sent to the second device (120).

3. The data storage device of claim 1, wherein the authentication unit (405) is further adapted to enable access to protected data by the second device (120) by instructing the interface (403) to send the protected data to the second device (120).

4. The data storage device of claim 1, wherein the authentication unit (105, 405) is further adapted to allow access to protected data only upon successful authentication of the at least one portable object (110).

5. The data storage device of claim 4, wherein the authentication unit is adapted to allow access to protected data only upon successful authentication of a plurality of portable objects (110) using at least one different secret for each of the plurality of portable objects.

6. The data storage device of claim 1, wherein the authentication unit (105, 405) is adapted to renew the detection of the presence of the at least one portable object (110) after a determined time.

7. The data storage device of claim 1, wherein the authentication unit (105, 405) is adapted to renew the detection of the presence of the at least one portable object (110) whenever access to protected data is requested by the second device (120).

8. The data storage device of claim 1, further comprising a communication unit (104) adapted to communicate with the at least one portable object (110), wherein the authentication unit is adapted to detect the presence of the at least one portable object (110) through the communication unit (104)

9. The data storage device of claim 8, wherein the communication unit (104) is adapted to communicate with the at least one portable object over a short-range wireless link.

10. The data storage device of claim 1, further adapted to store non-protected data in the first storage area (101), and to enable access to the non-protected data even when presence of the at least one portable object (110) is not detected.

11. A system for protection of data, the system comprising a data storage device (100, 400) of claim 1 and a portable object (110) comprising a communication unit (112) enabling the authentication unit (105, 405) to detect the presence of the portable object (110).
